Europäisches Patentamt

European Patent Office

Office européen des brevets

(19)

(11) Numéro de publication: **0 196 949 B1**

(12) **FASCICULE DE BREVET EUROPEEN**

(45) Date de publication de fascicule du brevet:
04.09.91

(51) Int. Cl.5: **C03C 11/00**, C04B 38/02,
C01B 21/072

(21) Numéro de dépôt: **86400500.4**

(22) Date de dépôt: **10.03.86**

Le dossier contient des informations techniques
présentées postérieurement au dépôt de la
demande et ne figurant pas dans le présent
fascicule.

(54) **Aluminosilicate massif cristallisé à structure expansée et son procédé de fabrication.**

(30) Priorité: **13.03.85 FR 8503694**

(43) Date de publication de la demande:
**08.10.86 Bulletin 86/41**

(45) Mention de la délivrance du brevet:
**04.09.91 Bulletin 91/36**

(84) Etats contractants désignés:
**AT BE CH DE FR GB IT LI LU NL SE**

(56) Documents cités:
**EP-A- 0 041 003
LU-A- 79 661**

**CHEMICAL ABSTRACTS, vol. 90, no. 16, 16
avril 1979, page 245, abrégé 125559d, Columbus, Ohio, US; & SU - A - 637 350 (URAL
SCIENTIFIC RESEARCH INSTITUTE OF FER-
ROUS METALS)**

**IDEM**

(73) Titulaire: **CENTRE NATIONAL DE LA RECHER-
CHE SCIENTIFIQUE (CNRS)
15, Quai Anatole France
F-75007 Paris(FR)**

(72) Inventeur: **Laurent, Yves
Les Landes de Billé Thorigné-Fouillard
F-35510 Cesson-Sevigne(FR)**
Inventeur: **Verdier, Patrick
La Perlais
F-35690 Acigne(FR)**
Inventeur: **Guyader, Jean
Le Monthelon
F-35690 Acigne(FR)**

(74) Mandataire: **Ahner, Francis et al
CABINET REGIMBEAU, 26, avenue Kléber
F-75116 Paris(FR)**

EP 0 196 949 B1

CHEMICAL ABSTRACTS, vol. 59, no. 7, 30 septembre 1963, colonne 7146e, Columbus, Ohio, US; A.M. LEJUS et al.: "Preparation and properties of aluminum nitride", & Compt. Rend. 257(1), 157-60 (1963)

CHEMICAL ABSTRACTS, vol. 86, no. 4, 24 janvier 1977, page 275, abrégé 20825b, Columbus, Ohio, US; S. WILD: "A novel route for the production of bêta-sialon powders", & J. Mater. Sci. 1976, 11(10), 1972-4

**Description**

La présente invention concerne un aluminosilicate massif au moins partiellement cristallisé présentant une structure expansée à pores fermés contenant de l'azote, ainsi que son procédé de fabrication.

La présente invention a eu pour but de mettre au point un nouveau matériau massif expansé présentant un bon coefficient d'isolation thermique, tout en possédant une bonne résistance à la compression le rendant utilisable comme matériau porteur. Un tel matériau trouve des applications multiples, tant dans le domaine traditionnel du bâtiment que dans l'isolation thermique des fours, dans le fabrication de parois et de portes coupe-feu, ainsi que dans la construction navale.

Il était en outre essentiel de pouvoir obtenir un tel type de matériau qui soit léger, imperméable à l'eau, ininflammable et résistant à des températures relativement élevées de l'ordre de 1000° C. Au surplus, il est hautement souhaitable qu'un tel matériau puisse être fabriqué de façon continue.

Dans l'état de la technique, il est connu de fabriquer des mousses de verre expansé en faisant appel à une technique d'expansion du verre de récupération au moyen de carbonate qui provoque, par élévation de la température, un dégagement de dioxyde de carbone. Dans la pratique, un tel matériau ne donne cependant pas entièrement satisfaction, notamment pour les raisons suivantes. Une telle mousse de verre présente une grande sensibilité à l'humidité qui peut être attribuée à la nature même de l'agent d'expansion utilisé. En effet, les carbonates mis en oeuvre laissent subsister dans le matériau un résidu d'oxyde métallique qui s'hydrolyse in situ pour donner naissance à des lessives basiques nuisibles à la qualité et à la longévité du produit. L'utilisation d'un tel produit nécessitait donc obligatoirement une protection supplémentaire à l'aide d'un enduit de qualité destiné à assurer son imperméabilisation.

En outre, une telle mousse de verre ne peut être fabriquée que de manière discontinue. Enfin, son mode d'obtention nécessite des temps de recuit très long de l'ordre de 17 heures, ce qui influence bien sûr très défavorablement les coûts de production d'un tel produit.

Le brevet US n° 2 837 873 a par ailleurs proposé un procédé de fabrication d'un matériau vitreux stratifié, se présentant sous la forme d'une succession de couches de structures cellulaires différentes. Le coeur du matériau, de faible densité, qui est destiné à conférer une bonne isolation thermique, doit cependant obligatoirement être enveloppé par une couche plus dense si l'on veut obtenir un produit doté de propriétés mécaniques acceptables. La différence de structures cellulaires des couches successives résulte d'une modification de la nature de l'agent moussant utilisé, ce dernier restant, dans tous les exemples, toujours à base de carbonate de calcium. Un tel produit présente donc également une forte sensibilité à l'humidité, tel qu'énoncé précédemment. De surcroît, la solution de compromis proposée par ce brevet US n° 2 837 873 conduit à un matériau dont les propriétés, tant isolantes que mécaniques, restent insuffisantes.

L'état de la technique peut également être illustré par le document SU-A-637 350 qui vise la fabrication d'un laitier ferrugineux expansé obtenu à partir d'un laitier aluminosilicate de calcium.

La présente invention concerne en revanche un aluminosilicate massif au moins partiellement cristallisé présentant une structure expansée à pores fermés contenant de l'azote, obtenu à partir d'un mélange de verre industriel et d'un nitrure à base d'aluminium, en particulier du nitrure d'aluminium. Ce type de matériau résulte de l'oxydation de nitrure à base d'aluminium, conduisant à un produit massif expansé à pores fermés renfermant de l'azote, ladite oxydation pouvant être favorisée par addition de catalyseurs, en particulier des oxydes métalliques ou non. Cette structure particulière du matériau le rend imperméable. Par ailleurs,ce matériau présente une totale inertie chimique ainsi que d'excellentes propriétés ignifuges.

Conformément au procédé de la présente invention, le matériau est obtenu en effectuant les opérations successives suivantes :
. broyage de verre industriel;
. addition de nitrure à base d'aluminium à raison de 0,1 à 20 % en masse par rapport à la masse du broyat de verre industriel;
. mélange du broyat et du nitrure ainsi additionné;
. oxydation du nitrure au sein dudit mélange par chauffage à une température de 800 à 1000° C, pendant environ 1 heure, et
. refroidissement et récupération de l'aluminosilicate cristallisé, expansé.

D'autres caractéristiques et avantages du produit et du procédé objets de la présente invention apparaîtront à la lecture détaillée faite ci-après notamment en référence à un exemple particulier de mise en oeuvre du procédé de fabrication.

L'aluminosilicate objet de la présente invention, peut par exemple être obtenu de la manière suivante. On procède tout d'abord au broyage de verre industriel, c'est-à-dire de verre de récupération, par exemple du verre à bouteille ou du verre à vitre. Un tel broyage est avantageusement effectué dans un broyeur à billes ou à boulets ; il est poursuivi jusqu'à obtention d'une poudre. Il s'est toutefois avéré dans la pratique que la granulométrie particulière d'un tel broyat n'était pas critique.

On additionne ensuite à ce broyat de 0,1 à 20% en masse d'un nitrure à base d'aluminium puis l'on procède à l'homogénéisation de ce mélange ainsi obtenu.

Le nitrure utilisé peut être par exemple constitué par du nitrure d'aluminium, soit du nitrure d'aluminium commercial, soit du nitrure d'aluminium présentant une plus haute réactivité, par exemple obtenu par réaction directe d'alumine et d'ammoniac à une température d'au moins environ 1200° 6. En variante, le nitrure utilisé peut également être constitué par le produit de réaction d'un aluminosilicate, tel que du kaolin naturel, avec de l'ammoniac. La fabrication d'un tel aluminosilicate azoté peut être avantageusement obtenue par chauffage de l'aluminosilicate sous courant d'ammoniac à une température de l'ordre de 1200° 6 pendant quelques heures. Le kaolin, dont il n'est pas nécessaire d'utiliser la meilleure qualité, est ainsi valorisé.

Le mélange ainsi obtenu du broyat de verre et de nitrure à base d'aluminium est ensuite placé dans un four, par exemple un four à moufle dont la montée en température depuis 20° C jusqu'à 900° C s'effectue en 1 h 30 environ. Cette température, voisine de la température de transition vitreuse, est alors maintenue pendant environ 1 heure, puis on laisse refroidir le four. Etant donné l'inertie thermique du four, on obtient une température de l'ordre de 400° C au bout d'environ 2 heures, température à laquelle on peut sortir l'aluminosilicate cristallisé expansé. Le matériau obtenu se présente alors sous la forme d'un produit de couleur grisblanchâtre, de volume très supérieur à celui du produit de départ.

Il convient de noter que les températures précédemment indiquées, ainsi que les cycles de montée et de descente en température, peuvent subir un certain nombre d' adaptations et de modifications.

Il convient de noter qu'un tel mode opératoire permet une mise en oeuvre continue du procédé selon l'invention, l'oxydation du nitrure à base d'aluminium étant par exemple réalisée par passage au travers d'un four tunnel.

L'aluminosilicate partiellement cristallisé présente toutes les propriétés recherchées.

Le matériau selon l'invention présente une masse spécifique apparente comprise entre 200 et 700 kg/m³. La valeur exacte de la masse spécifique obtenue est fonction de la nature des verres de départ utilisés, ainsi que de la nature et de la qualité et de la quantité du nitrure à base d'aluminium qui s'y trouve ajouté. Cet aluminosilicate est donc un matériau plus léger que l'ensemble des matériaux poreux traditionnels.

Du fait de sa structure expansée à pores fermés renfermant de l'azote, l'aluminosilicate massif selon l'invention constitue un matériau parfaitement imperméable à l'eau et présentant une excellente résistance vis-à-vis de l'action des agents chimiques. Il résiste en effet parfaitement à l'acide chlorhydrique concentré, à l'acide nitrique concentré ainsi qu'à la soude concentrée. Après contact de l'aluminosilicate selon l'invention pendant 6 heures avec ces agents chimiques, à la température ambiante, on ne décèle pas la moindre modification de structure du matériau. De surcroît, l'aluminosilicate selon l'invention est insensible aux solvants organiques tels que l'alcool éthylique, le benzène, l'acétone, l'éther, etc.

Le produit selon l'invention présente également une excellente résistance à des températures élevées pouvant atteindre de l'ordre de 1000° C. Ce produit, chauffé pendant plusieurs heures à une température de 1040° C, ne subit aucune dégradation. Il est par ailleurs totalement insensible aux chocs thermiques. En effet, les essais de fatigue du matériau soumis à des trempes entre +400° C et +20° C d'une part, et entre +20° C et -196° C (température de l'azote liquide) d'autre part, n'ont révélé aucune détérioration, ni même la présence de simples fissures témoignant de l'existence de contraintes internes importantes. Le coefficient de dilatation thermique de ce matériau, mesuré entre 20 et 500° C, est égal à environ $7,4 \times 10^{-6}$° K$^{-1}$.

Divers essais de résistance à la compression, ont démontré que l'aluminosilicate selon l'invention présentait une résistance à la compression supérieure à environ $3.10^6$ Pa. Une telle propriété confère donc au matériau selon l'invention un excellent caractère porteur.

Diverses expérimentations conduites sur l'aluminosilicate objet de la présente invention, ont révélé que ce dernier présentait un coefficient d'isolation thermique $\lambda$ de l'ordre de 0,07 W/m° C. Il constitue par conséquent un excellent matériau isolant.

Enfin, la diffusivité thermique de différents échantillons d'aluminosilicates selon l'invention a été déterminée par la méthode flash, comme indiqué ci-après.

Principe de la méthode

La méthode flash utilisée consiste à irradier uniformément pendant un temps très bref, par une source lumineuse impulsionnelle, l'une des faces d'un échantillon généralement cylindrique et de faible épaisseur et à analyser l'évolution, en fonction du temps et de la température de la face opposée au flux thermique.

La surface irradiée est préalablement noircie afin d'absorber la majeure partie de l'énergie incidente et, dans le cas d'échantillons transparents à la longueur d'onde utilisée, d'éviter toute transmission du flux optique au sein du matériau. La diffusivité thermique est déterminée par l'analyse de la courbe T(t) obtenue à partir de divers modèles théoriques prenant en compte ·la distribution spatiotemporelle de l'impulsion énergétique ainsi que les pertes thermiques axiales.

Description du dispositif de mesure

L'appareillage mis en oeuvre permet d'effectuer des mesures entre 20°C et 1000°C. La source thermique impulsionnelle est constituée par un laser verre/néodyme ($\lambda = 1,06$ $\mu$m) fonctionnant en mode relaxé et délivrant un faisceau de diamètre 23 mm. L'enceinte de chauffage comprend principalement un tube cylindrique en inconel 600 de longueur 1,12 m et de diamètre extérieur 88 mm autour duquel sont bobinés 5 enroulements chauffants répartis au voisinage de la zone centrale du four, rendue isotherme sur 120 mm environ. Cette enceinte est munie d'un système de refroidissement par circulation d'eau disposé aux deux extrémités comme en périphérie et isolée thermiquement par plusieurs couches de laine réfractaire.

Le contrôle des températures à l'intérieur de l'enceinte est assuré par 8 thermocouples en chromel-alumel gainés d'inconel positionnés sur la surface extérieure du tube de chauffage. L'enceinte peut être, enfin, mise sous vide au moyen d'une pompe primaire de 4,5 m$^3$/h et d'une pompe secondaire débitant 200 j/s.

L'échantillon d'essai est fixé au moyen de trois tiges d'alumine au coeur d'une bague en acier inoxydable reposant sur un berceau solidaire d'une sonde constituée par un tube amovible en inconel 600 de longueur 800 mm. L'uniformité de température dans la zone où est fixé l'échantillon est contrôlée au moyen de trois thermocouples en chromel/alumel revêtus d'une gaine d'inconel situés au niveau de l'échantillon et à 60 mm de part et d'autre de celui-ci.

L'élévation de température est enregistrée par un thermocouple en fils de chromel et d'alumel de diamètre 0,2 mm positionné au centre de la surface de l'échantillon opposée au flux thermique et monté en opposition avec un thermocouple de même nature fixé dans l'ambiance du four au voisinage immédiat de l'échantillon. Le signal obtenu est amplifié, mémorisé au moyen d'un oscilloscope à mémoire, puis photographié et analysé.

Interprétation du signal

Le paramètre fondamental permettant la détermination de la diffusivité thermique du matériau analysé est le temps mis par le signal pour atteindre la moitié de sa valeur maximale. En assimilant l'échantillon à un mur semi-infini absorbant sur sa surface frontale une impulsion énergétique instantanée et en considérant le modèle adiabatique élémentaire, la résolution de l'équation de a chaleur conduit à la relation :

$$\alpha = 0,139 \, l^2/\tau_{\frac{1}{2}}$$

où $\alpha$ représente la diffusivité thermique, $l$ l'épaisseur de l'échantillon et $\tau\frac{1}{2}$ le temps de demi-montée du signal thermique. Des modèles théoriques permettent, par ailleurs, de prendre en considération la durée finie de l'impulsion laser, de même que les pertes thermiques axiales.

Présentation des échantillons

Les mesures de diffusivité thermique ont été réalisées à la température ambiante sur six échantillons d'épaisseurs différentes. Les faces d'irradiation et de détection ont été recouvertes, par collage, d'une couche mince d'aluminium. La surface des échantillons exposée au rayonnement laser a été, également, recouverte d'une pellicule de graphite colloïdal se polymérisant à l'air et absorbant la quasi-totalité de l'énergie émise dans l'impulsion laser.

Résultats expérimentaux

Les résultats expérimentaux relatifs aux divers échantillons étudiés sont consignés dans le tableau 1 ci-après. La précision de ces résultats est conditionnée, d'une part, par les incertitudes (évaluées à ± 4%) sur la mesure des paramètres contenus dans la relation dérivée du modèle adiabatique (épaisseur de l'échantillon, temps de demi-montée du signal $\tau\frac{1}{2}$) et, d'autre part, par les erreurs liées à l'écart entre les conditions expérimentales réelles et les conditions aux limites postulées dans les modèles théoriques appliqués, dont l'incertitude liée à la qualité de collage des films d'aluminium sur les faces des échantillons.

## Tableau I

| épaisseur de l'échantillon en mm | coefficient de pertes $(\rho)$ | temps de $\frac{1}{2}$ montée (s) | diffusivité apparente $(\times 10^{-3})cm^2/s$ | diffusivité réelle $(\times 10^{-3})cm^2/s$ | valeurs moyennes $(\times 10^{-3})cm^2/s$ |
|---|---|---|---|---|---|
| 3,36 | 1,10 | 3,84 | 4,08 | 3,30 | 3,37 ± 0,05 |
| | | 3,75 | 4,18 | 3,38 | |
| | | 3,73 | 4,20 | 3,40 | |
| | | 3,73 | 4,20 | 3,40 | |
| 2,50 | 1,05 | 2,86 | 3,03 | 2,43 | 2,43 ± 0,01 |
| | | 2,85 | 3,04 | 2,43 | |
| | | 2,84 | 3,05 | 2,44 | |
| 3,37 | 1,05 | 3,22 | 4,90 | 3,92 | 3,88 ± 0,06 |
| | | 3,22 | 4,90 | 3,92 | |
| | | 3,33 | 4,73 | 3,79 | |
| | | 3,24 | 4,86 | 3,89 | |
| 3,60 | 1,22 | 3,49 | 5,15 | 4,29 | 4,36 ± 0,05 |
| | | 3,42 | 5,26 | 4,37 | |
| | | 3,42 | 5,26 | 4,37 | |
| | | 3,39 | 5,31 | 4,41 | |
| 2,50 | 1,12 | 2,26 | 3,84 | 3,12 | 3,11 ± 0,08 |
| | | 2,26 | 3,84 | 3,12 | |
| | | 2,35 | 3,69 | 3,00 | |
| | | 2,22 | 3,91 | 3,18 | |
| 2,99 | 1,25 | 2,88 | 4,31 | 3,61 | 3,58 ± 0,10 |
| | | 2,88 | 4,31 | 3,61 | |
| | | 3,02 | 4,11 | 3,44 | |
| | | 2,84 | 4,37 | 3,66 | |

**Revendications**

1. Aluminosilicate massif au moins partiellement cristallisé présentant une structure expansée à pores fermés contenant de l'azote, obtenu à partir d'un mélange de verre industriel et d'un nitrure à base d'aluminium, en particulier du nitrure d'aluminium.

2. Aluminosilicate massif selon la revendication 1, caractérisé en ce qu'il présente une masse spécifique apparente comprise entre 200 et 700 kg/m$^3$.

3. Aluminosilicate massif selon la revendication 1, caractérisé en ce que le coefficient d'isolation thermique $\lambda$ est de l'ordre de 0,07 W/m$^\circ$C.

4. Aluminosilicate massif selon la revendication 1, caractérisé en ce que la diffusivité thermique est de l'ordre de 3 x 10$^{-3}$ cm$^2$/S.

5. Aluminosilicate massif selon la revendication 1, caractérisé en ce que la résistance à la compression est supérieure à environ 3.10$^6$ Pa.

6. Aluminosilicate massif selon la revendication 1, caractérisé en ce que le coefficient de dilatation thermique mesuré entre 20 et 500$^\circ$C est égal à environ 7,4.10$^{-6}$ $^\circ$K$^{-1}$.

7. Procédé de fabrication d'un aluminosilicate massif au moins partiellement cristallisé présentant une structure expansée à pores fermés contenant de l'azote, selon l'une des revendications 1 à 6, caractérisé en ce que l'on effectue les opérations successives suivantes :
   . broyage de verre industriel ;
   . addition de nitrure à base d'aluminium à raison de 0,1 à 20% en masse par rapport à la masse du broyat de verre industriel ;
   . mélange du broyat et du nitrure ainsi additionné ;
   . oxydation du nitrure au sein dudit mélange par chauffage à une température de 800 à 1000$^\circ$C, pendant environ 1 heure et,
   . refroidissement et récupération de l'aluminosilicate cristallisé expansé.

8. Procédé selon la revendication 7, caractérisé en ce que le nitrure utilisé est le nitrure d'aluminium AlN.

9. Procédé selon la revendication 7, caractérisé en ce que le nitrure utilisé est le produit de réaction d'un aluminosilicate, tel que le kaolin naturel, avec de l'ammoniac.

10. Procédé selon la revendication 9, caractérisé en ce que le nitrure utilisé est obtenu par chauffage d'aluminosilicate, par exemple de kaolin, sous courant d'ammoniac à une température de l'ordre de 1200$^\circ$C, pendant quelques heures.

11. Procédé selon l'une des revendications 7 à 10, caractérisé en ce qu'il est mis en oeuvre de manière continue, l'oxydation du nitrure étant réalisée par passage dudit mélange au travers d'un four tunnel.

12. Procédé selon l'une des revendications 7 à 11, caractérisé en ce que l'oxydation du nitrure à base d'aluminium est conduite en présence d'un catalyseur, en particulier un oxyde.

**Claims**

1. A massive aluminosilicate, at least partly crystalline, having an expanded closed cell structure containing nitrogen, obtained from a mixture of industrial glass and a nitride based on aluminium, particularly aluminium nitride.

2. A massive aluminosilicate according to claim 1, the apparent density whereof is comprised between 200 and 700 kg/m$^3$.

3. A massive aluminosilicate according to claim 1, whose coefficient of thermal insulation $\lambda$ is of the order of 0.07 W/m$^\circ$C.

4. A massive aluminosilicate according to claim 1, whose thermal diffusivity is of the order of 3 x 10$^{-3}$

7

cm$^2$/S.

5. A massive aluminosilicate according to claim 1, whose compressive strength is higher than about 3.10$^6$ Pa.

6. A massive aluminosilicate according to claim 1, whose coefficient of thermal expansion measured between 20 and 500$^\circ$ C is equal to about 7.4 . 10$^{-6}$ $^\circ$ K$^{-1}$.

7. Process of manufacturing a massive aluminosilicate, at least partly crystalline, having an expanded closed cell structure containing nitrogen, according to one of claims 1 to 6, said process comprising the following successive operations :
   . grinding industrial glass ;
   . adding nitride based on aluminium in the proportion of 0.1 to 20 % by weight with respect to the weight of the ground industrial glass;
   . mixing the ground glass material and the thus-added nitride ;
   . oxidizing the nitride within said mixture by heating to a temperature of 800 to 1000$^\circ$ C, for about one hour, and
   . cooling and recovering the expanded crystalline aluminosilicate.

8. Process according to claim 7, wherein the nitride used is aluminium nitride AIN.

9. Process according to claim 8, wherein the nitride used is the product of the reaction of an aluminosilicate, such as natural kaolin, with ammonia.

10. Process according to claim 9, wherein the nitride used is obtained by heating aluminosilicate, for example kaolin, in a flow of ammonia, to a temperature of the order of 1200$^\circ$ C for some hours.

11. Process according to one of claims 7 to 10, said process being conducted continuously, the oxidation of the nitride being effected by passage of said mixture through a tunnel furnace.

12. Process according to one of claims 7 to 11, wherein the oxidation of the aluminium based nitride is conducted in the presence of a catalyst, particularly an oxide.

**Patentansprüche**

1. Massives Aluminosilikat, das zumindest teilweise kristallisiert ist, mit einer expandierten Struktur, mit geschlossenen, Stickstoff enthaltenden Poren, erhalten aus einem Gemisch von Industrieglas und einem Nitrid auf der Basis von Aluminium, insbesondere Aluminiumnitrid.

2. Massives Aluminosilikat nach Anspruch 1, dadurch gekennzeichnet, daß es ein scheinbares spezifisches Gewicht von 200 bis 700 kg/m$^3$ aufweist.

3. Massives Aluminosilikat nach Anspruch 1, dadurch gekennzeichnet, daß der thermische Isolationskoeffizient $\lambda$ in der Größenordnung von 0,07 W/m$^\circ$ C liegt.

4. Massives Aluminosilikat nach Anspruch 1, dadurch gekennzeichnet, daß die thermische Diffusionsfähigkeit in der Größenordnung von 3 x 10$^{-3}$ cm$^2$/S liegt.

5. Massives Aluminosilikat nach Anspruch 1, dadurch gekennzeichnet, daß der Kompressionswiderstand über etwa 3. 10$^6$ Pa liegt.

6. Massives Aluminosilikat nach Anspruch 1, dadurch gekennzeichnet, daß der thermische Ausdehnungskoeffizient, gemessen zwischen 20 und 500$^\circ$ C etwa 7,4. 10$^`$6 $^o$K$^{-1}$ ist.

7. Verfahren zur Herstellung eines massiven, zumindest teilweise kristallisierten Aluminosilicats mit einer expandierten Struktur, mit geschlossenen, Stickstoff enthaltenden Poren, nach einem der Ansprüche 1 bis 6, dadurch gekennzeichnet, daß man nacheinander folgende Arbeitsgänge durchführt;
   . Zerkleinern von Industrieglas;

. Zusatz von Nitrid auf der Basis von Aluminium in einer Menge von 0,1 bis 20 Massen%, bezogen auf die Masse des zerkleinerten industriellen Glases;

. Vermischen des zerkleinerten Materials und des so zugesetzten Nitrids;

. Oxidation des Nitrids in dem Gemisch durch Erwärmen auf eine Temperatur von 800 bis 1000°C während etwa einer Stunde und,

. Abkühlen und Gewinnen des kristallisierten expandierten Aluminosilikats.

8. Verfahren nach Anspruch 7, dadurch gekennzeichnet, daß das verwendete Nitrid Aluminiumnitrid, AlN, ist.

9. Verfahren nach Anspruch 7, dadurch gekennzeichnet, daß das verwendete Nitrid das Reaktionsprodukt von einem Aluminosilikat, wie natürlichem Kaolin, mit Ammoniak ist.

10. Verfahren nach Anspruch 9, dadurch gekennzeichnet, daß das verwendete Nitrid erhalten wird durch Erwärmen von Aluminosilikat, beispielsweise Kaolin, unter einem Ammoniakstrom, auf eine Temperatur in der Größenordnung von 1200°C, während mehrerer Stunden.

11. Verfahren nach einem der Ansprüche 7 bis 10, dadurch gekennzeichnet, daß es in kontinuierlicher Weise durchgeführt wird, wobei die Oxidation des Nitrids durch Hindurchführen des Gemischs durch einen Tunnelofen durchgeführt wird.

12. Verfahren nach einem der Ansprüche 7 bis 11, dadurch gekennzeichnet, daß die Oxidation des Nitrids auf der Basis von Aluminium in Anwesenheit eines Katalysators, insbesondere eines Oxids, durchgeführt wird.